# EUROPEAN PATENT APPLICATION

(11) **EP 3 136 720 A1**
(43) Date of publication of application: **01.03.2017**
(21) Application number: 15783816.0
(22) Date of filing: 20.04.2015
(51) Int. Cl.: H04N 7/18, B60R 1/00, B60R 11/02

(54) **IMAGE PROCESSING DEVICE, METHOD FOR CONTROLLING IMAGE PROCESSING DEVICE, PROGRAM, AND DISPLAY DEVICE**

(30) Priority: 25.04.2014 JP 2014091016
(71) Applicant: Panasonic Intellectual Property Management Co., Ltd., Osaka-shi, Osaka 570-6207 (JP)
(72) Inventor: ARAI, Yuko, Osaka-shi, Osaka 540-6207 (JP); NAKAI, Wataru, Osaka-shi, Osaka 540-6207 (JP)
(74) Representative: Schwabe - Sandmair - Marx
(86) International application number: PCT/JP2015/002137
(87) International publication number: WO 2015/162895

(57) **Abstract**

An image processing device includes an image processor, a display region determiner, and a zoom factor determiner. The display region determiner determines a position of a display image within a captured image based on information about an angle of the display device. The zoom factor determiner determines a zoom factor of the captured image based on information about pushing or pulling force to be applied to the display device. The image processor generates the display image to be displayed on the display device by processing the captured image using the position of the display image within the captured image, the zoom factor, and a predetermined zoom center.

## Description

### TECHNICAL FIELD

The present invention relates to an image processing device in which an image to be displayed on a display device installed in a vehicle is generated from a rear-view image of the vehicle captured by a camera.

### BACKGROUND ART

According to some well-known conventional image processing devices, the driver determines the position of a captured image to be displayed by changing the installation angle of the display device, and then zooms the image in or out by operating a touch panel mounted on the display device (see, for example, Patent Literature 1).

### Citation List

### Patent Literature

PTL 1: Japanese Unexamined PatentApplication Publication No. 2009-100180

### SUMMARY OF THE INVENTION

The present invention provides an image processing device which is simple for the driver to determine a position of a captured image to be displayed or to zoom the image in and out.

A first aspect of the image processing device of the present invention includes an image processor, a display region determiner, and a zoom factor determiner. The display region determiner determines the position of the display image within the captured image based on information about the angle of the display device. The zoom factor determiner determines the zoom factor of the captured image based on information about pushing or pulling force to be applied to the display device. The image processor processes the captured image so as to generate the display image to be displayed on the display device using the position of the display image within the captured image, the zoom factor, and a predetermined zoom center.

A second aspect of the image processing device according to the present invention includes an image processor, a display region determiner, a zoom center determiner, a positional information presenter, a zoom factor determiner, and a mode switcher. The display region determiner determines the position of the display image within the captured image based on information about the angle of the display device. The zoom center determiner determines the zoom center of the display image based on the information about the angle of the display device. The positional information presenter presents information indicating the zoom center. The zoom factor determiner determines the zoom factor of the captured image based on information about pushing or pulling force to be applied to the display device. The mode switcher switches between a display region determination mode and a center determination mode. In the display region determination mode, the display region determiner determines the position of the display image within the captured image, based on a mode switching signal received from the display device based on the information about the angle of the display device. In the center determination mode, the zoom center determiner determines the zoom center of the display image based on the information about the angle of the display device. The image processor processes the captured image so as to generate the display image to be displayed on the display device using the position of the display image within the captured image, the zoom center, and the zoom factor.

A third aspect of the image processing device according to the present invention includes an image processor, a display region determiner, a zoom center determiner, a positional information presenter, and a zoom factor determiner. The display region determiner determines the position of the display image within the captured image based on information about the angle of the display device. The zoom center determiner determines the zoom center of the display image based on information about a traveling force to be applied to the display device. The positional information presenter presents information indicating the zoom center. The zoom factor determiner determines the zoom factor of the captured image based on information about pushing or pulling force to be applied to the display device. The image processor processes the captured image so as to generate the display image to be displayed on the display device using the position of the display image within the captured image, the zoom center, and the zoom factor.

According to the present invention, the driver can select a region to be displayed from a captured image or zoom the image in and out.

### BRIEF DESCRIPTION OF DRAWINGS

FIG. 1 is a block diagram showing the configuration of an image processing device according to a first exemplary embodiment of the present invention.
FIG. 2A is a conceptual view showing the installed condition of a display device according to the first exemplary embodiment of the present invention.
FIG. 2B is another conceptual view showing the installed condition of the display device according to the first exemplary embodiment of the present invention.
FIG. 3A shows an operation of a display region determiner in the first exemplary embodiment of the present invention.
FIG. 3B shows another operation of the display region determiner in the first exemplary embodiment of the present invention.
FIG. 4 is a flowchart showing an example of operations of the image processing device according to the first exemplary embodiment of the present invention.
FIG. 5A is an example of the transition of the display screen along with the operation of the display device according to the first exemplary embodiment of the present invention.
FIG. 5B is another example of the transition of the display screen along with the operation of the display device according to the first exemplary embodiment of the present invention.
FIG. 5C is still another example of the transition of the display screen along with the operation of the display device according to the first exemplary embodiment of the present invention.
FIG. 5D is still another example of the transition of the display screen along with the operation of the display device according to the first exemplary embodiment of the present invention.
FIG. 6 is a block diagram showing the configuration of an image processing device according to a second exemplary embodiment of the present invention.
FIG. 7 is a flowchart showing an example of operations of the image processing device according to the second exemplary embodiment of the present invention.
FIG. 8A is a first view showing an example of the transition of the display screen along with the operation of the display device according to the second exemplary embodiment of the present invention.
FIG. 8B is a first view showing another example of the transition of the display screen along with the operation of the display device according to the second exemplary embodiment of the present invention.
FIG. 8C is a first view showing still another example of the transition of the display screen along with the operation of the display device according to the second exemplary embodiment of the present invention.
FIG. 9A is a second view showing an example of the transition of the display screen along with the operation of the display device according to the second exemplary embodiment of the present invention.
FIG. 9B is a second view showing another example of the transition of the display screen along with the operation of the display device according to the second exemplary embodiment of the present invention.
FIG. 9C is a second view showing still another example of the transition of the display screen along with the operation of the display device according to the second exemplary embodiment of the present invention.
FIG. 10 is a block diagram showing the configuration of an image processing device according to a third exemplary embodiment of the present invention.
FIG. 11 is a flowchart showing an example of operations of the image processing device according to the third exemplary embodiment of the present invention.
FIG. 12A is a first view showing an example of the transition of the display screen along with the operation of the display device according to the third exemplary embodiment of the present invention.
FIG. 12B is a first view showing another example of the transition of the display screen along with the operation of the display device according to the third exemplary embodiment of the present invention.
FIG. 12C is a first view showing still another example of the transition of the display screen along with the operation of the display device according to the third exemplary embodiment of the present invention.
FIG. 13A is a second view showing an example of the transition of the display screen along with the operation of the display device according to the third exemplary embodiment of the present invention.
FIG. 13B is a second view showing another example of the transition of the display screen along with the operation of the display device according to the third exemplary embodiment of the present invention.
FIG. 13C is a second view showing still another example of the transition of the display screen along with the operation of the display device according to the third exemplary embodiment of the present invention.

### DESCRIPTION OF EMBODIMENTS

According to the conventional image processing devices, however, the driver is required to hold the display device by hand and then change its installation angle in order to determine the position of the captured image to be displayed. Moreover, when zooming the captured image in or out, the driver is required to specify a zoom center by touching the corresponding position on the screen of the display device.

Thus, the conventional image processing devices require the driver to operate the display device differently between when deciding the position of the captured image to be displayed on the display device and when zooming the captured image in or out.

### (FIRST EXEMPLARY EMBODIMENT)

An image processing device according to a first exemplary embodiment of the present invention will now be described with reference to drawings.

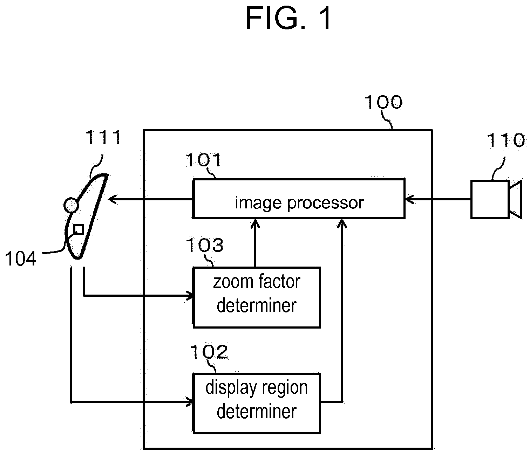

FIG. 1 is a block diagram showing the configuration of image processing device 100 according to the first exemplary embodiment of the present invention.

In FIG. 1, image processor 101 receives a rear-view image of a vehicle captured by camera 110 mounted in the vehicle. Image processor 101 then processes the captured image based on image-processing parameters acquired from display region determiner 102 and zoom factor determiner 103, thereby generating a display image to be displayed on display device 111.

Display device 111 displays the display image generated by image processor 101. The display screen of display device 111 (hereinafter referred to simply as "display screen") has a position that is predetermined to be the center when the captured image is zoomed in or out. The position is used for deciding position coordinates on the captured image. The position coordinate in the captured image that correspond to the predetermined position on the display screen represents the center around which the captured image is zoomed in or out. The display screen can be formed of, for example, a liquid crystal display.

Display device 111 includes sensor 104, which detects information about the horizontal and vertical angles of display device 111 (hereinafter, "angle information") and information about pushing or pulling force to be applied to display device 111 (hereinafter, "pushing and pulling force information").

The horizontal and vertical angles of display device 111 indicate the angles of the display screen in the horizontal and vertical directions, respectively, and can be changed by the operation of the driver. The pushing or pulling force to be applied to display device 111 is the force of the driver to push display device 111 toward the windshield and the force of the driver to pull it toward himself/herself, respectively.

Display region determiner 102 determines a fundamental display region based on angle information. The fundamental display region will be described later.

Zoom factor determiner 103 determines the zoom factor of a captured image based on pushing and pulling force information.

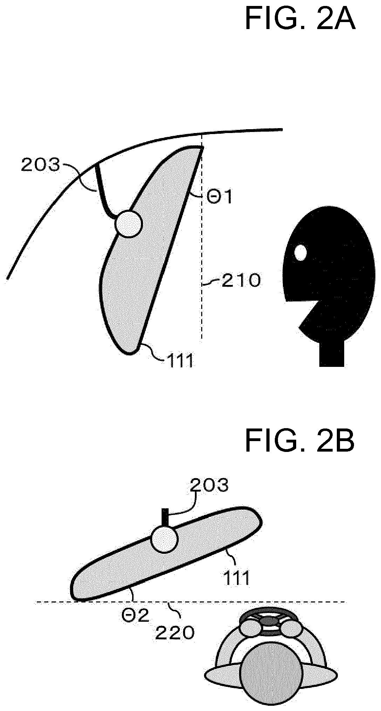

FIGS. 2A and 2B are conceptual views showing the installed condition of display device 111 in the vehicle.

FIG. 2A is a lateral view of the driver's seat, and FIG. 2B is an overhead view of the seat. Display device 111 is installed in a position in the vehicle where a rearview mirror is attached via attachment member 203. Display device 111 is installed at a vertical angle of θ1 with respect to the vertical direction 210 shown by the dotted line in FIG. 2A, and at a horizontal angle of θ2 with respect to the horizontal direction 220 shown by the dotted line in FIG. 2B.

In FIGS. 2A and 2B, display device 111 is in the initial state where the installation angles have been adjusted by the driver.

The angle information expresses the condition shown in FIGS. 2A and 2B to be, for example, a vertical angle (θ1) of 0° and a horizontal angle (θ2) of 0°.

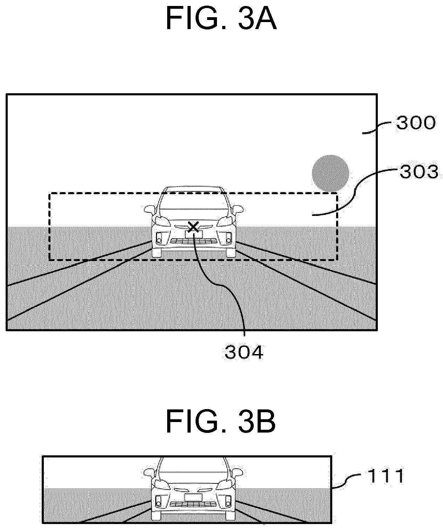

FIGS. 3A and 3B show operations of display region determiner 102.

In FIG. 3A, captured image 300 is an example of a captured image to be sent to image processor 101.

In FIG. 3A, the dotted-line region is fundamental display region 303, which is the region of a captured image to be displayed on the display screen when no zooming is applied. Region 303 can be shifted within captured image 300 along with the angles of display device 111.

Display region determiner 102 calculates the coordinate which define the position of fundamental display region 303 within captured image 300 based on the angle information. The coordinates can be, for example, those of the four corners of region 303 in captured image 300.

Display region determiner 102 calculates as fundamental display region 303 the position coordinate obtained by shifting the original position by, for example, 10 pixels for a change in angle of one degree (1°).

When the driver turns the right end of display device 111 from the view of the driver by 3° toward the back from the position with a vertical angle of 0 degree and a horizontal angle of 0° , display region determiner 102 calculates as fundamental display region 303 the position coordinates obtained by shifting the original position to the right direction by 30 pixels.

When the driver then tilts display device 111 by 1° in the downward direction, display region determiner 102 calculates as fundamental display region 303 the position coordinates obtained by shifting the calculated coordinates by 10 pixels in the downward direction.

In FIG. 3A, the symbol "×" in fundamental display region 303 represents predetermined zoom center 304 on the display screen. Zoom center 304 is in a fixed position relative to fundamental display region 303, so that the position coordinate of center 304 is shifted together with a change in the position of fundamental display region 303 within captured image 300.

Thus, the driver can change the angles of display device 111 so as to shift the position of fundamental display region 303 within captured image 300, thereby changing the position coordinate of zoom center 304 within captured image 300.

FIG. 3B shows a display screen when no zooming is applied.

An example of the main operations of image processing device 100 according to the first exemplary embodiment will now be described with reference to drawings.

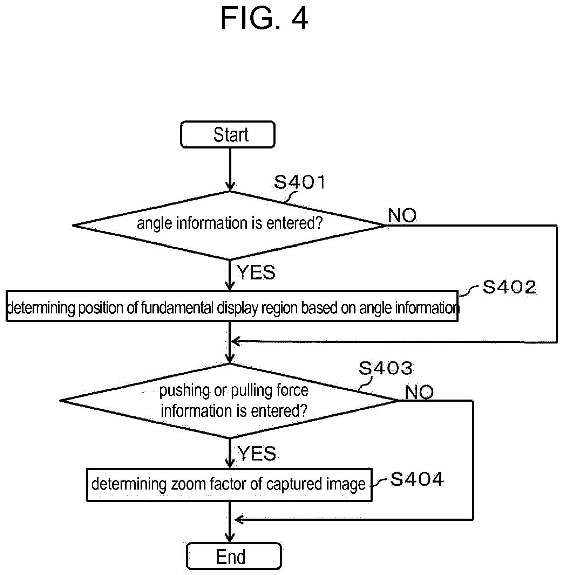

FIG. 4 is a flowchart showing an example of how display region determiner 102 and zoom factor determiner 103 of image processing device 100 update the position coordinates of the fundamental display region and the zoom factor, respectively, which are the image-processing parameters.

If new angle information is entered to display region determiner 102 (YES in Step S401), display region determiner 102 determines the position of the fundamental display region based on the entered angle information and calculates the position coordinates of the region (Step S402).

If no new angle information is entered to display region determiner 102 (NO in Step S401), or if pushing and pulling force information is entered to zoom factor determiner 103 (YES in Step S403) after display region determiner 102 calculates the position coordinates of the fundamental display region (Step S402), zoom factor determiner 103 determines the zoom factor of the captured image based on the entered pushing and pulling force information. When the entered pushing and pulling force information is a pushing force, zoom factor determiner 103 determines the zoom factor of captured image 300 to be, for example, 50%. When the entered information is a pulling force, zoom factor determiner 103 determines the zoom factor of image 300 to be, for example, 200% (Step S404).

If no pushing and pulling force information is entered to zoom factor determiner 103 (NO in Step S403), or if zoom factor determiner 103 determines the zoom factor, the process is terminated.

If receiving captured image 300 from camera 110, image processor 101 acquires the following image-processing parameters: the position coordinates of fundamental display region 303 determined by display region determiner 102, and the zoom factor determined by zoom factor determiner 103. Image processor 101 then generates a display image by image-processing captured image 300 based on the acquired image-processing parameters.

More specifically, image processor 101 first calculates the position coordinate of the zoom center in the captured image based on the following: a position on the display screen or on the fundamental display region that is predetermined to be the center around which the captured image is zoomed, and the position coordinates of the fundamental display region. Next, image processor 101 zooms the captured image in or out around the zoom center by the zoom factor, which is one of the image-processing parameters. Finally, image processor 101 extracts, as a display image, a region defined by the position coordinates of the fundamental display region from the zoomed image.

In the above description, image processor 101 zooms the captured image first, and then extracts a region to be a display image, but may alternatively extract the region first, and then zoom the captured image. In the latter case, image processor 101 first extracts the region to be zoomed from the captured image based on the following: a position on the display screen or on the fundamental display region that is predetermined to be the center around which the captured image is zoomed, the position coordinates of the fundamental display region, and the zoom factor. Image processor 101 then zooms the extracted region in or out by the zoom factor, thereby generating a display image.

Camera 110 supplies captured image 300 to image processor 101 at a constant frequency, for example, 30 frames per second. Every time receiving a captured image from camera 110, image processor 101 acquires an image-generating parameter and generates a display image. The generated display image is displayed on display device 111.

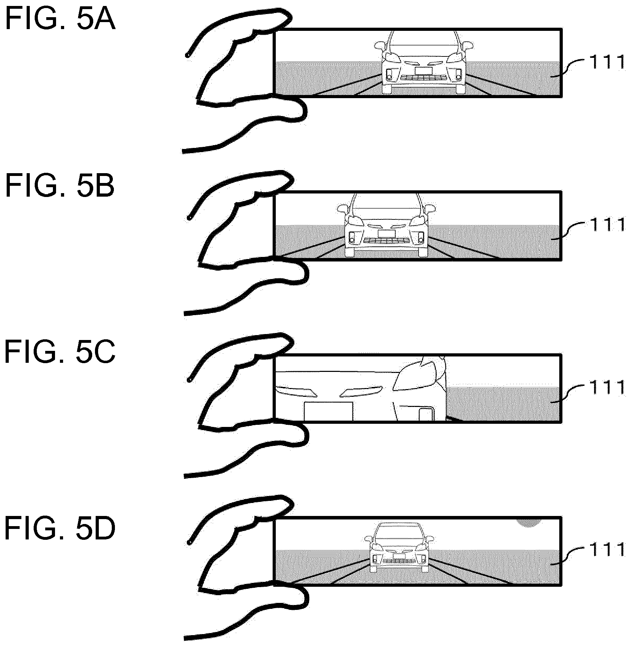

FIGS. 5A to 5D show examples of the transition of the display screen while the driver is operating display device 111. The zoom center of the captured image is at the center of the display screen.

FIG. 5A is an initial state of the display screen. FIG. 5B is a display screen obtained when the driver turns the right end of display device 111 from the view of the driver toward the back (or turns the left end toward the driver). In that case, the zoom center is on the right headlight of the vehicle behind the own vehicle appearing on the display screen.

FIG. 5C is a display screen obtained when the driver pulls display device 111 toward himself/herself (namely, applies a pulling force to display device 111) in the state of FIG. 5B. The captured image is zoomed in around the right headlight of the vehicle behind the own vehicle and is displayed on the display screen.

FIG. 5D is a display screen obtained when the driver pushes display device 111 toward the windshield (namely, applies a pushing force to display device 111) in the state of FIG. 5B. The captured image is zoomed out around the right headlight of the vehicle behind the own vehicle and is displayed with a large background area on the display screen.

As described above, in image processing device 100 of the present exemplary embodiment, a display image is generated as follows. First, the fundamental display region to be displayed on the display screen is calculated based on the angles of display device 111. Next, the position coordinate on the captured image which correspond to the zoom center predetermined on the display screen is calculated. Next, the zoom factor is determined from the pushing or pulling force applied to display device 111. Finally, the captured image is image-processed based on the calculated reference display region, the zoom center coordinate of the captured image, and the zoom factor.

With image processing device 100 of the present exemplary embodiment, the driver can hold and operate display device 111 in the same manner both in the case of selecting a region to be displayed from a captured image and in the case of zooming the captured image. In other words, the driver can select a region to be displayed from a captured image and zoom the captured image without changing the way he/she handles display device 111. Furthermore, the driver can zoom a captured image in or out through an intuitive operation such as pushing or pulling the image device. Thus, the driver can select a region to be displayed from a captured image or zoom the image in and out with simple operations.

The image processing device according to the exemplary embodiment of the present invention can be achieved by dedicated hardware implementation. Alternatively, however, it is possible to store a program to implement the function in a computer-readable recording medium, to read the stored program into computer system, and to execute it.

In the above description, display region determiner 102 calculates the coordinates of the four corners of region 303 in image 300 as coordinates for specifying the position of fundamental display region 303 within captured image 300, but may calculate any other parameters as well as the position of fundamental display region 303 within captured image 300 can be specified by each of them. For example, when display region determiner 102 calculates the position coordinate of the center of region 303 in captured image 300 as the coordinates to define the position of region 303 within image 300, image processor 101 generates a display image using the width and height of region 303, which are previously held in image processor 101.

Zooming is performed by a predetermined factor in the above description, but the zoom factor may alternatively be changed depending on the strength of the pushing or pulling force.

Furthermore, the display device may be configured to maintain the display image even if its angles are changed after the captured image is zoomed. In that case, when the driver returns the angles of display device 111 showing a zoomed image to the initial state where, for example, the driver faces the display device, the driver can see the zoomed display image at an easily viewable angle.

### (SECOND EXEMPLARY EMBODIMENT)

An image processing device according to a second exemplary embodiment of the present invention will now be described with reference to drawings.

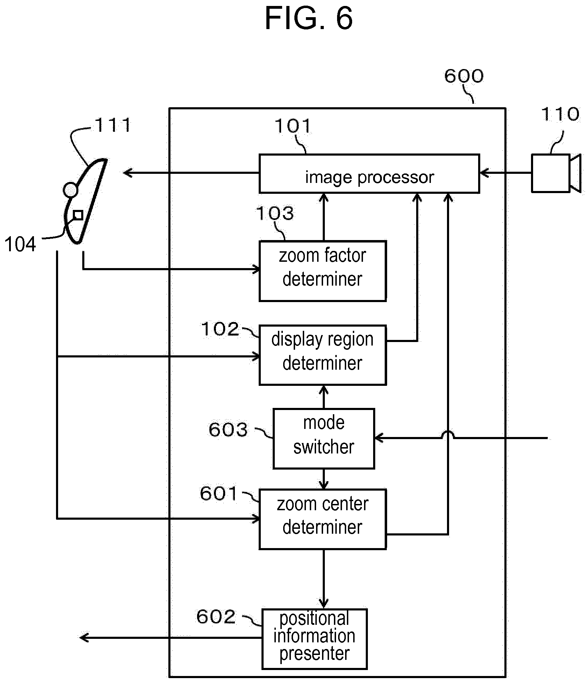

FIG. 6 is a block diagram showing the configuration of image processing device 600 according to the second exemplary embodiment of the present invention.

In the present exemplary embodiment, the same components as in the first exemplary embodiment are denoted by the same reference numerals, and thus a detailed description thereof is omitted.

The second exemplary embodiment differs from the first exemplary embodiment in that image processing device 600 of the second exemplary embodiment includes zoom center determiner 601, positional information presenter 602, and mode switcher 603.

On the display screen of display device 111 (hereinafter referred to simply as "display screen"), zoom center determiner 601 shifts a zoom center that is predetermined as an initial value within the display screen based on the angle information.

Zoom center determiner 601 calculates the position coordinate obtained by shifting the zoom center on the display screen by, for example, 10 pixels for a change in angle of 1°.

Assume that the driver selects a fundamental display region from the captured image by changing the angles of display device 111 and then turns the right end of display device 111 from the view of the driver by 3° toward the back. In that case, zoom center determiner 601 determines the position shifted from the zoom center of the initial value or the immediately previous position to the left direction by 30 pixels, as the zoom center on the display screen. Zoom center determiner 601 then sends the position coordinate to positional information presenter 602. The position coordinate of the zoom center on the display screen is entered as an image-processing parameter to image processor 101.

When the driver subsequently tilts display device 111 by 1° in the downward direction, zoom center determiner 601 calculates the position shifted from the calculated zoom center on the display screen by 10 pixels in the upward direction. Zoom center determiner 601 then sends it to positional information presenter 602. The position coordinate of the zoom center on the display screen is entered as an image-processing parameter to image processor 101.

Positional information presenter 602 presents the driver with the position coordinate of the zoom center on the display screen determined by zoom center determiner 601.

Mode switcher 603 acquires a mode switching signal from outside image processing device 600. Mode switcher 603 switches between a display region determination mode and a center determination mode based on the mode switching signal acquired from outside. In the display region determination mode, display region determiner 102 determines the fundamental display region based on the angle information. In the center determination mode, zoom center determiner 601 determines the zoom center based on the angle information.

An example of the main operations of image processing device 600 according to the second exemplary embodiment will now be described with reference to drawings.

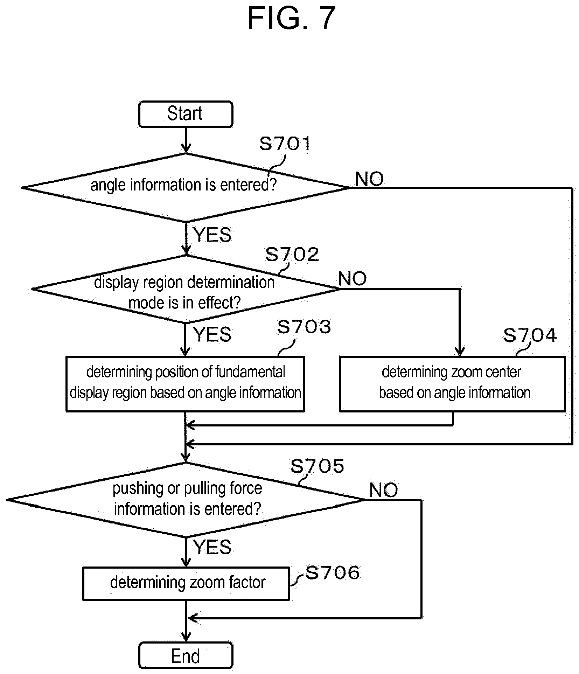

FIG. 7 is a flowchart showing an example of how display region determiner 102, zoom factor determiner 103, and zoom center determiner 601 of image processing device 600 update image-processing parameters. Mode switcher 603 switches the operations of display region determiner 102 and zoom center determiner 601.

When new angle information is entered to image processing device 600 (YES in Step S701), mode switcher 603 switches the operations as follows depending on the current mode (Step S702).

When the current mode is the display region determination mode (YES in Step S702), display region determiner 102 calculates the position coordinates of the reference display region based on the angle information (Step S703).

When the current mode is the center determination mode (NO in Step S702), zoom center determiner 601 calculates the position of the zoom center on the display screen based on the angle information (Step S704).

If receiving pushing and pulling force information (YES in Step S705), zoom factor determiner 103 determines the zoom factor of the captured image based on the received pushing and pulling force information. When the entered pushing and pulling force information shows a pushing force, zoom factor determiner 103 determines the zoom factor of captured image 300 to be, for example, 50%. When the entered information shows a pulling force, zoom factor determiner 103 determines the zoom factor of image 300 to be, for example, 200% (Step S706).

If no pushing and pulling force information is entered to zoom factor determiner 103 (NO in Step S705) or if zoom factor determiner 103 determines the zoom factor, the process is terminated.

When receiving captured image 300 from camera 110, image processor 101 acquires the following image-processing parameters: the position coordinates of fundamental display region 303 determined by display region determiner 102; the zoom factor determined by zoom factor determiner 103; and the position coordinate of the zoom center on the display screen determined by zoom center determiner 601. Image processor 101 then generates a display image from captured image 300 based on the acquired image-processing parameters.

In the first exemplary embodiment, image processor 101 calculates the position coordinate of the zoom center in the captured image based on a position that is predetermined to be the center around which the captured image is to be zoomed on the display screen or on the fundamental display region and the position coordinates of the fundamental display region.

In the second exemplary embodiment, the position coordinate of the zoom center in the captured image is calculated based on the zoom center on the display screen determined by zoom center determiner 601, instead of the position that is predetermined to be the center around which the captured image should be zoomed on the display screen or on the fundamental display region as in the first exemplary embodiment, and also based on the position coordinates of the fundamental display region.

Positional information presenter 602 superimposes information indicating the zoom center onto the display screen, based on the zoom center on the display screen determined by zoom center determiner 601. Positional information presenter 602 presents the driver with the information indicating the zoom center by superimposing, for example, a figure such as a black circle representing the zoom center on the display screen shown on display device 111.

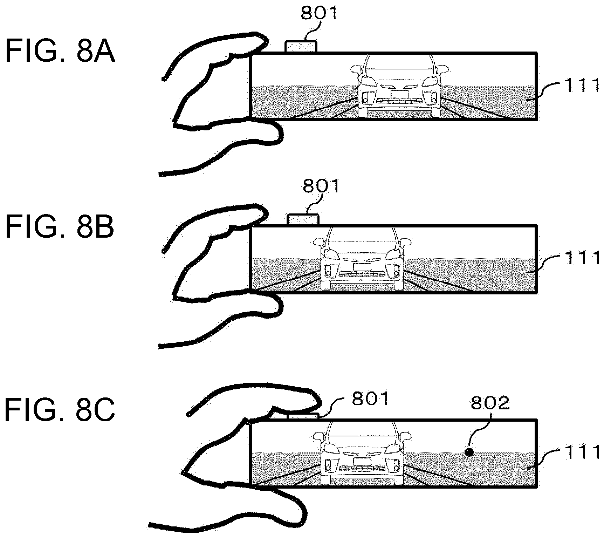

FIGS. 8A to 9C show examples of the transition of the display screen while the driver is operating display device 111 in the second exemplary embodiment of the present invention.

FIG. 8A is an initial state of the display screen. In FIG. 8A, display device 111 is equipped with switch 801 for mode switching. Switch 801 is located at a position where the driver can push or pull the display screen and change its angles while pushing switch 801.

If the driver pushes switch 801, mode switcher 603 acquires a mode switching signal. While switch 801 is being pushed, mode switcher 603 allows the center determination mode to be in effect. While switch 801 is not being pushed, mode switcher 603 allows the display region determination mode to be in effect.

FIG. 8B is a display screen obtained when the driver turns the right end of display device 111 from the view of the driver toward the back in the display region determination mode. In that case, the zoom center is on the right headlight of the vehicle behind the own vehicle appearing on the display screen. Image processing device 600 in the display region determination mode is identical to that in the first exemplary embodiment.

FIG. 8C shows a state where the driver pushes switch 801 in the state of FIG. 8B, thereby switching the mode from the display region determination mode to the center determination mode. FIG. 8C shows the information indicating the zoom center of the captured image, which is predetermined as the initial value, on the display screen. In FIG. 8C, the black circle represents the information indicating zoom center 802.

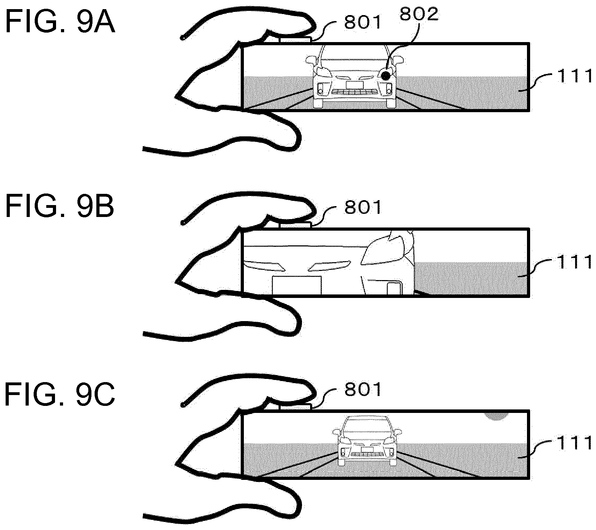

FIG. 9A shows a state where the driver changes the angles of display device 111 in the center determination mode, thereby setting the zoom center onto the right headlight of the vehicle behind the own vehicle.

FIG. 9B is a display screen obtained when the driver pulls display device 111 toward himself/herself (namely, applies a pulling force to display device 111) in the state of FIG. 9A. The captured image is zoomed in around the right headlight of the vehicle behind the own vehicle.

FIG. 9C is a display screen obtained when the driver pushes display device 111 toward the windshield (namely, applies a pushing force to display device 111) in the state of FIG. 9A. The captured image is zoomed out around the right headlight of the vehicle behind the own vehicle and is displayed with a large background area.

As described above, in image processing device 600 of the present exemplary embodiment, the mode is switched depending on whether switch 801 of display device 111 is being pushed or not. And, the fundamental display region to be displayed on the display screen and the zoom center on the display screen are determined based on changes in the angles of display device 111. Furthermore, the zoom factor is determined based on the pushing or pulling force to be applied to display device 111. A display image is generated from the captured image based on the following: the reference display region determined by display region determiner 102; the zoom center coordinate on the display screen determined by zoom center determiner 601, and the zoom factor determined by zoom factor determiner 103. Positional information presenter 602 presents the driver with the information indicating the zoom center by superimposing, for example, the zoom center coordinate onto the display screen.

As a result, the driver can hold and operate display device 111 in the same manner in the case of selecting a region to be displayed on the display screen from a captured image, in the case of zooming the captured image, and in the case of determining the zoom center. In other words, the driver can select a region to be displayed on display device 111 from a captured image, zoom the captured image, and determine the zoom center without changing the way he/she handles device 111. As the driver is also provided with the information indicating the zoom center coordinate, he/she can determine the zoom center coordinate while monitoring the information. Thus, the driver can select a region to be displayed from the captured image or zoom the image in and out with a simple operation.

The zoom center is determined to be the position corresponding to the angles of display device 111 in the above description, but may be shifted at a speed corresponding to the angles.

Positional information presenter 602 presents the driver with the information indicating the zoom center by superimposing a figure such as a black circle onto the display screen in the above description. However, the information is not limited to figures, and can be anything that indicates the position, such as changing the luminance of the zoom center on the display screen. The function of positional information presenter 602 may be achieved as follows. One example is to use two straight bars which are parallel with connected sides of the frame of the display screen and shift within the display screen so that their intersection can represent the zoom center. Another example is to use a light emission diode (LED), which emits at the intersection of a perpendicular line drawn from the zoom center to the frame of the display screen, and the frame of the display screen.

Zooming is performed by a predetermined factor in the above description, but the zoom factor may alternatively be changed depending on the strength of the pushing or pulling force.

Switch 801 is located on the upper left of display device 111 when the driver faces the front of device 111 in the above description. Switch 801 may be located at a position where the driver can turn, push, or pull display device 111 while pushing switch 801, such as the other side (the rear side) of the display screen.

In the present exemplary embodiment, the center determination mode is in effect while switch 801 is being pushed. Alternatively, the display region determination mode may be in effect while switch 801 is being pushed, or these modes may be switched alternatively every time switch 801 is pushed.

The image processing device according to the exemplary embodiment of the present invention can be achieved by dedicated hardware implementation. Alternatively, however, it is possible to store a program to implement the function in a computer-readable recording medium, to read the stored program into computer system, and to execute it.

### (THIRD EXEMPLARY EMBODIMENT)

An image processing device according to a third exemplary embodiment of the present invention will now be described with reference to drawings.

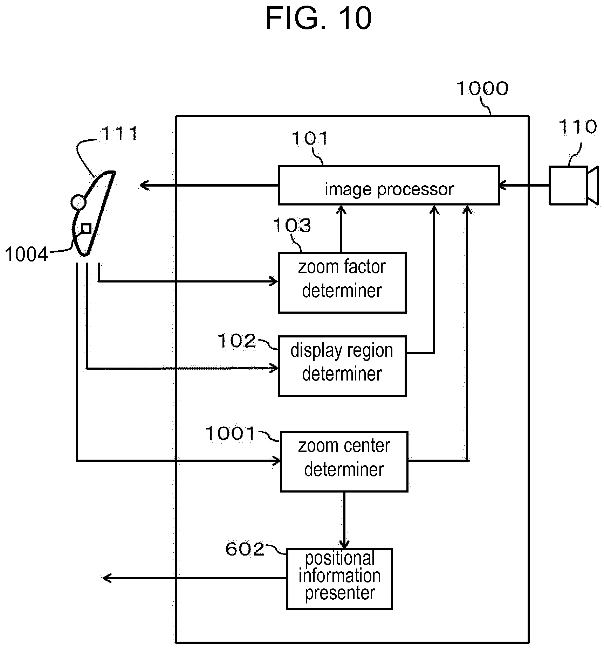

FIG. 10 is a block diagram showing the configuration of image processing device 1000 according to the third exemplary embodiment of the present invention. In the present exemplary embodiment, the same components as in the first and second exemplary embodiments are denoted by the same reference numerals, and thus a detailed description thereof is omitted.

The third exemplary embodiment differ from the first exemplary embodiment in that image processing device 1000 of the third exemplary embodiment includes zoom center determiner 1001 and positional information presenter 602.

The third exemplary embodiment further differs from the first exemplary embodiment in that display device 111 of the third exemplary embodiment includes sensor 1004, which detects not only the angle information and the pushing and pulling force information, but also information about a traveling force to be applied to display device 111 (hereinafter, "traveling force information").

The traveling force to be applied to display device 111 is the force that the driver moves display device 111 in an up, down, left, or right direction.

In the third exemplary embodiment, sensor 1004 of display device 111 detects as the traveling force, for example, a pressure change in an up, down, left, or right direction generated between display device 111 and the attachment member.

On the display screen of display device 111 (hereinafter referred to simply as "display screen"), zoom center determiner 1001 determines a zoom center of a captured image by shifting the zoom center that is predetermined as an initial value, based on the traveling force information. For example, zoom center determiner 1001 moves the zoom center based on the number of times that the traveling force is entered. Meanwhile, zoom center determiner 601 according to the second exemplary embodiment determines a zoom center on the display screen by shifting the zoom center that is predetermined as the initial value within the display screen based on the angle information when the center determination mode is in effect. In contrast, the present exemplary embodiment does not use modes, and instead, zoom center determiner 1001 determines a zoom center on the display screen by shifting the zoom center that is predetermined as the initial value within the display screen based on the traveling force information.

For example, zoom center determiner 1001 calculates the position coordinate obtained by shifting the zoom center on the display screen by 10 pixels every time when a traveling force is applied.

Assume that the driver applies a traveling force to display device 111 three times in the right direction from the view of the driver. In that case, zoom center determiner 1001 calculates the coordinate of the zoom center by shifting the position of the initial value or the immediately previous position by 30 pixels in the right direction, and sends the calculated coordinate to positional information presenter 602. The position coordinate of the zoom center on the display screen are also entered as one of the image-processing parameters to image processor 101.

When the driver applies a traveling force to display device 111 once in the downward direction, zoom center determiner 1001 calculates the coordinate obtained by shifting the calculated coordinate in the downward direction by 10 pixels, and sends it to positional information presenter 602. The position coordinate of the zoom center on the display screen are entered as one of the image-processing parameters to image processor 101.

Positional information presenter 602 operates in the same manner as in the second exemplary embodiment.

An example of the main operations of image processing device 1000 according to the third exemplary embodiment will now be described with reference to drawings.

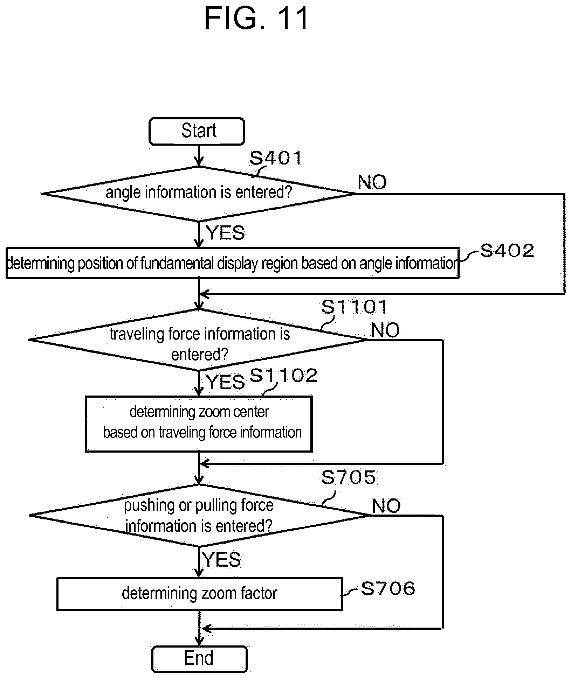

FIG. 11 is a flowchart showing an example of how display region determiner 102, zoom factor determiner 103, and zoom center determiner 1001 of image processing device 1000 update the image-processing parameters.

The operations in Steps S401 and S402 are identical to those in the first exemplary embodiment. When receiving traveling force information (YES in Step S1101), zoom center determiner 1001 determines the zoom center of the display image based on the traveling force information, and sends it to positional information presenter 602 (Step S1102).

If no traveling force information is entered to zoom center determiner 1001 (NO in Step S1101) or if the zoom center is determined in Step S1102, the subsequent operations to termination (Steps S705 and S706) are identical to those in the second exemplary embodiment.

When receiving captured image 300 from camera 110, image processor 101 generates a display image from captured image 300 based on an image-generating parameter in the same manner as in the second exemplary embodiment.

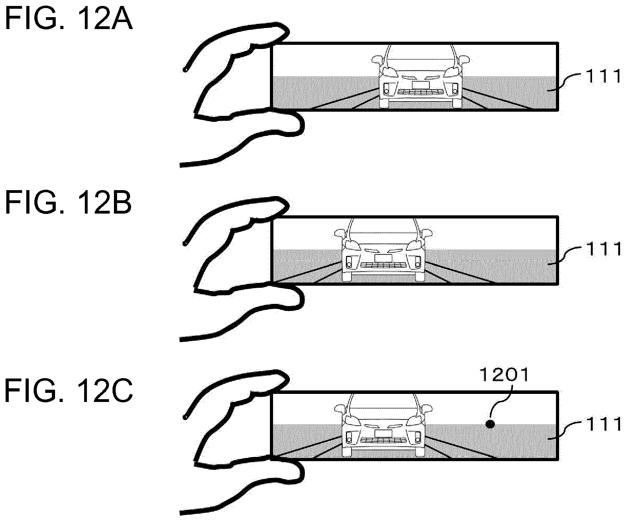

FIGS. 12A to 13C show examples of the transition of the display screen while the driver is operating device 111 in the third exemplary embodiment of the present invention.

FIG. 12A is an initial state of the display screen. FIG. 12B is a display screen obtained when the driver turns the right end of display device 111 from the view of the driver toward the back. In that case, the zoom center is on the right headlight of the vehicle behind the own vehicle appearing on the display screen.

FIG. 12C is a display screen obtained when the driver applies a traveling force to display device 111 in the left direction in the state of FIG. 12B. In FIG. 12C, the black circle represents information indicating zoom center 1201 of the captured image, which is predetermined as the initial value on the display screen.

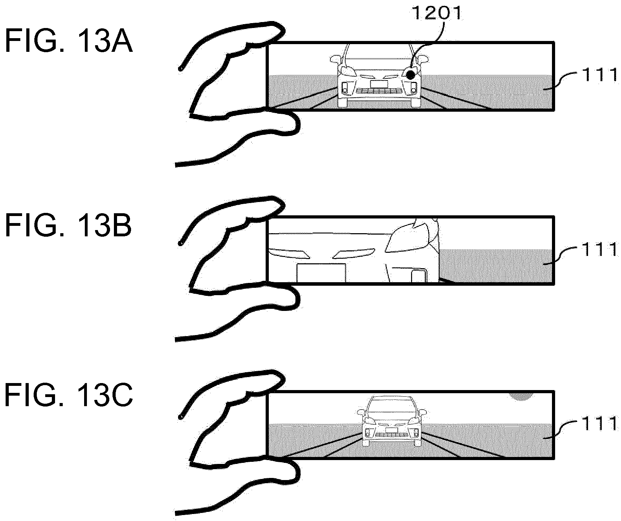

FIG. 13A shows a case that the driver has applied a traveling force to display device 111 in the left direction with respect to the driver so as to set the zoom center onto the right headlight in the state of FIG. 12C.

FIG. 13B is a display screen obtained when the driver pulls display device 111 toward himself/herself (namely, applies a pulling force to display device 111) in the state of FIG. 13A. The captured image is zoomed in around the right headlight of the vehicle behind the own vehicle appearing on the display screen.

FIG. 13C is a display screen obtained when the driver pushes display device 111 toward the windshield (namely, applies a pushing force to display device 111) in the state of FIG. 13A. The captured image is zoomed out around the right headlight of the vehicle behind the own vehicle and is displayed with a large background area on the display screen.

As described above, image processing device 1000 of the present exemplary embodiment operates as follows. The fundamental display region to be displayed on the display screen is determined based on changes in the angles of display device 111. The zoom center of the captured image in the display image is determined based on the traveling force to be applied to display device 111 in an up, down, left, or right direction. The captured image is zoomed in or out by the pushing or pulling force to be applied to display device 111.

As a result, the driver can hold and operate display device 111 in the same manner in the case of selecting a region to be displayed on the display screen from a captured image, in the case of zooming the captured image, and in the case of determining the zoom center. In other words, the driver can select a region to be displayed on display device 111 from the captured image, zoom the captured image, and determine the zoom center without changing the way of handling device 111. For example, the driver can perform the following operations while holding display device 111 by hand: changing the fundamental display region to be displayed on the display screen by changing the angles of the display screen; changing the zoom center by trying to shift the display screen in an up, down, left, or right direction; and zooming in or out the display image to be displayed on the display screen by pulling or pushing the display screen. Thus, the driver can select a region to be displayed from a captured image or zoom the image in and out with a simple operation.

In the present exemplary embodiment, the zoom center of the captured image in the display image is shifted based on the number of times that the traveling force is entered to zoom center determiner 1001. Alternatively, the zoom center of the captured image in the display image can be shifted based on the time period during which the traveling force is applied and/or the traveling force value detected by sensor 1004.

The zoom center of the captured image in the display image is shifted to the right direction by pushing display device 111 to the left direction in the above description, but may alternatively be shifted to the left direction.

The vehicle-mounted display device according to the exemplary embodiments of the present invention can be achieved by dedicated hardware implementation. Alternatively, however, it is possible to store a program to implement the function in a computer-readable recording medium, to read the stored program into computer system, and to execute it.

### INDUSTRIAL APPLICABILITY

The image processing device of the present invention is useful as an electric mirror for vehicles.

### REFERENCE MARKS IN THE DRAWINGS

- 100, 600, 1000: image processing device
- 101: image processor
- 102: display region determiner
- 103: zoom factor determiner
- 104, 1004: sensor
- 110: camera
- 111: display device
- 203: attachment member
- 210: vertical direction
- 220: horizontal direction
- 300: captured image
- 303: fundamental display region
- 304, 1201: center
- 601, 1001: zoom center determiner
- 602: positional information presenter
- 603: mode switcher
- 801: switch
- 802: position

## Claims

1. An image processing device comprising:
an image processor which processes a captured image so as to generate a display image to be displayed on a display device;
a display region determiner which determines a position of the display image within the captured image based on information about an angle of the display device; and
a zoom factor determiner which determines a zoom factor of the captured image based on information about pushing or pulling force to be applied to the display device,
wherein the image processor generates the display image using the position of the display image within the captured image, the zoom factor, and a predetermined zoom center.

2. The image processing device according to claim 1,
wherein the predetermined zoom center is at a center of the display image.

3. An image processing device comprising:
an image processor which processes a captured image so as to generate a display image to be displayed on a display device;
a display region determiner which determines a position of the display image within the captured image based on information about an angle of the display device;
a zoom center determiner which determines a zoom center of the display image based on the information about the angle of the display device;
a positional information presenter which presents information indicating the zoom center;
a zoom factor determiner which determines a zoom factor of the captured image based on information about pushing or pulling force to be applied to the display device; and
a mode switcher which switches between a display region determination mode and a center determination mode based on a mode switching signal received from the display device,
wherein the display region determiner determines the position of the display image within the captured image based on the information about the angle of the display device in the display region determination mode, and the zoom center determiner determines the zoom center of the display image based on the information about the angle of the display device in the center determination mode,
wherein the image processor generates the display image using the position of the display image within the captured image, the zoom center, and the zoom factor.

4. The image processing device according to claim 3,
wherein the mode switching signal is received from a mode-switching-signal input device included in the display device, and
the mode-switching-signal input device is installed in a position where the display device can be changed in angle and be pushed or pulled while the mode-switching-signal input device is being operated.

5. The image processing device according to claim 3 or 4,
wherein in the center determination mode, the zoom center is changed corresponding to the angle of the display device.

6. The image processing device according to claim 3 or 4,
wherein in the center determination mode, the zoom center is shifted at a speed corresponding to the angle of the display device.

7. An image processing device comprising:
an image processor which processes a captured image so as to generate a display image to be displayed on a display device;
a display region determiner which determines a position of the display image within the captured image based on information about an angle of the display device;
a zoom center determiner which determines a zoom center of the display image based on information about a traveling force to be applied to the display device;
a positional information presenter which presents information indicating the zoom center; and
a zoom factor determiner which determines a zoom factor of the captured image based on information about pushing or pulling force to be applied to the display device,
wherein the image processor generates the display image using the position of the display image within the captured image, the zoom center, and the zoom factor.

8. The image processing device according to claim 7,
wherein the information about the traveling force is information about a pressure to be applied to the display device in an up, down, left, or right direction.

9. The image processing device according to claim 7,
wherein the zoom center determiner determines the zoom center based on a number of times that the traveling force is applied to the display device.

10. The image processing device according to claim 7,
wherein the zoom center determiner determines the zoom center based on a time period during which the traveling force is applied.

11. The image processing device according to any one of claims 3 to 10, wherein the zoom center determiner determines the zoom factor of the captured image according to the pushing or pulling force.

12. The image processing device according to any one of claims 1 to 11, wherein the display device is installed in a position to which a rearview mirror is attached inside a vehicle.

13. A method of controlling an image processing device for processing a captured image so as to generate a display image to be displayed on a display device, the method comprising:
determining a position of the display image within the captured image based on information about an angle of the display device;
determining a zoom factor of the captured image based on information about pushing or pulling force to be applied to the display device; and
generating the display image using the position of the display image within the captured image, the zoom factor, and a predetermined zoom center.

14. A method of controlling an image processing device for processing a captured image so as to generate a display image to be displayed on a display device, the method comprising:
doing that based on information about an angle of the display device;
determining a zoom center of the display image based on the information about the angle of the display device and presenting information indicating the determined zoom center;
switching between determination of the position of the display image within the captured image and presentation of the information indicating the zoom center;
determining a zoom factor of the captured image based on information about pushing or pulling force to be applied to the display device; and
generating the display image using the position of the display image within the captured image, the zoom center, and the zoom factor.

15. A method of controlling an image processing device for processing a captured image so as to generate a display image to be displayed on a display device, the method comprising:
determining a position of the display image within the captured image based on information about an angle of the display device;
determining a zoom center of the display image based on information about a traveling force to be applied to the display device;
presenting information indicating the zoom center;
determining a zoom factor of the captured image based on information about pushing or pulling force to be applied to the display device; and
generating the display image using the position of the display image within the captured image, the zoom center, and the zoom factor.

16. A program for causing a computer to execute the method of controlling the image processing device according to any one of claims 13 to 15.

17. A display device comprising:
a sensor which detects angle information and pushing and pulling force information; and
a display screen which displays a captured image in a form of a display image,
wherein the display image is generated using the following:
a position of the display image within the captured image, the position being determined based on the angle information of the sensor,
a zoom center predetermined on the display screen, and
a zoom factor determined based on the pushing and pulling force information of the sensor.

18. A display device comprising:
a sensor which detects angle information and pushing and pulling force information;
a mode-switching-signal input device which switches between a first mode and a second mode; and
a display screen which displays a captured image in a form of a display image,
wherein the display image is generated using the following:
a position of the display image within the captured image, the position being determined based on the angle information of the sensor in the first mode,
a zoom center of the captured image within the display image, the zoom center being determined based on the angle information of the sensor in the second mode, and
a zoom factor determined based on the pushing and pulling force information of the sensor.

19. A display device comprising:
a sensor which detects angle information, pushing and pulling force information, and traveling force information; and
a display screen which displays a captured image in a form of a display image,
wherein the display image is generated using the following:
a position of the display image within the captured image, the position being determined based on the angle information of the sensor,
a zoom center of the captured image within the display image, the zoom center being determined based on the traveling force information of the sensor, and
the pushing and pulling force information of the sensor.
